# EUROPÄISCHE PATENTANMELDUNG

(11) **EP 0 908 590 A1**
(43) Veröffentlichungstag der Anmeldung: **14.04.1999**
(21) Anmeldenummer: 97117655.7
(22) Anmeldetag: 11.10.1997
(51) Int. Cl.: E05C 1/14, E05B 15/02, B01J 3/03

(54) **Verschlusseinrichtung für eine Heissgerätetür**

(71) Anmelder: Rahrbach GmbH, D-42579 Heiligenhaus (DE)
(72) Erfinder: Braetsch, Ernst-Christian, 45219 Essen (Kettwig) (DE)
(74) Vertreter: Götz, Friedrich, Dipl.-Phys.

(57) **Zusammenfassung**

Verschlußeinrichtung mit einem Betätigungshebel, einem Schließzapfen und einem Schließkloben, wobei der Betätigungshebel (4) einen Winkelhebel (6) mitnimmt, der einen Schnäpper (8) trägt. Letzterer hebt einen mit Rastnasen (10a,10b) versehenen Riegel (10) an der einen Schließzapfen (14) aufweist, der in einem Schließkloben (15) ruht. Der Kloben ist mit einer Einlaufschräge (15a), einer Zwischenrast (15b) und einer Hauptrast versehen.

## Beschreibung

### Technisches Gebiet

Die Erfindung betrifft eine Verschlußeinrichtung für die Tür eines mit Übertemperatur und/oder Überdruck arbeitenden Gerätes mit einem Betätigungshebel, der einen Schließzapfen bewegt, und einem am Türblatt befestigten Schließkloben, der eine Zwischenrast ermöglicht.
In einem ersten Öffnungsschritt wird die Tür so weit in Öffnungsrichtung bewegt, daß zwischen Türblatt und Zarge ein Spalt entsteht, der das gefahrlose Entweichen von Überdruck, Heißdampf oder Schwaden ermöglicht.
Bei einem zweiten Öffnungsschritt kann die Tür dann ganz geöffnet werden.
Die Zwischenrast bewirkt zwangsläufig eine gewisse Pause für einen gefahrlosen Druckausgleich; das Bedienungspersonal wird dadurch vor Verletzungen bewahrt.

### Stand der Technik

Eine derartige Verschlußeinrichtung ist aus der EP 0345681 bekannt geworden.
Dort ist ein schwenkbarer Türgriff mit einer Drehfalle verbunden, die auf einen gehäusefesten Kloben mit Sperrstift einwirkt. Eine Sperrklinke mit Rastvorsprung und Auslösehebel wirkt so auf die Drehfalle ein, daß diese bei einer ersten Türgriffbetätigung in eine Zwischenrast übergeht, in der die Tür nur einen Spalt geöffnet wird. Erst bei einer weiteren Aufziehbewegung am Türgriff wird die Drehfalle durch den Auslösehebel und die Sperrklinke ganz freigegeben, so daß die Tür voll geöffnet werden kann.
Beim Zudrücken oder Zuwerfen der Tür gehen Türgriff und Drehfalle in die verriegelte Schließstellung zurück, so daß erneut ein Öffnungsvorgang in zwei Stufen vornehmbar ist.

### Darstellung der Erfindung

Der Erfindung liegt die Aufgabe zugrunde, diesen bekannten und bewährten Zweistufenverschluß durch eine einfache, robuste und leicht justierbare Konstruktion ohne Drehfalle zu ersetzen.

Erfindungsgemäß gelingt dies dadurch, daß der Betätigungshebel einen Winkelhebel mitnimmt, daß der Winkelhebel einen Schnäpper trägt, daß der Schnäpper einen mit Rastnasen versehenen Riegel anhebt und daß der Riegel einen Schließzapfen aufweist, der in einem mit Einlaufschräge, Zwischenrast und Hauptrast versehenen Schließkloben ruht. Wenn die Tür fest geschlossen ist, liegt der Schließzapfen auf der Hauptrast des Klobens. Wird der Riegel und damit der Schließzapfen um einen Schritt angehoben, fällt letztere in die Zwischenrast, wobei die Öffnungsbewegung durch die sich entspannenden Dichtungsprofile unterstützt wird.
Beim Zweiten Öffnungshub läuft der Zapfen am Schließkloben vorbei.
Wird die Tür zugedrückt oder zugeschlagen, gleitet der Schließzapfen über die Einlaufschräge, bis er unter Federkraft in die neutrale Mittellage, also die Hauptrast, zurückfällt.

Bei einer bevorzugten Ausführungsform der Erfindung werden Schließzapfen und Riegellagerbolzen mit Rollen versehen, um die Reibung klein und die Abnutzung gering zu halten.

### Beschreibung der Zeichnungen

Ein Ausführungsbeispiel der Erfindung wird anhand von Fig. 1- 6 der Zeichnung beschrieben.
- **Fig. 1**: zeigt die Verschlußeinrichtung von der Seite,
- **Fig. 2**: die verschiedenen Positionen des Schließzapfens in Bezug zum Schließkloben,
- **Fig. 3**: eine Draufsicht auf Verschlußgehäuse und Schließkloben,
- **Fig. 4**: einen Querschnitt des Verschlußgehäuses mit Riegel von oben,
- **Fig. 5**: die Seitenansicht dieses Gehäuses,
- **Fig. 6**: den Riegel mit Schließzapfen.

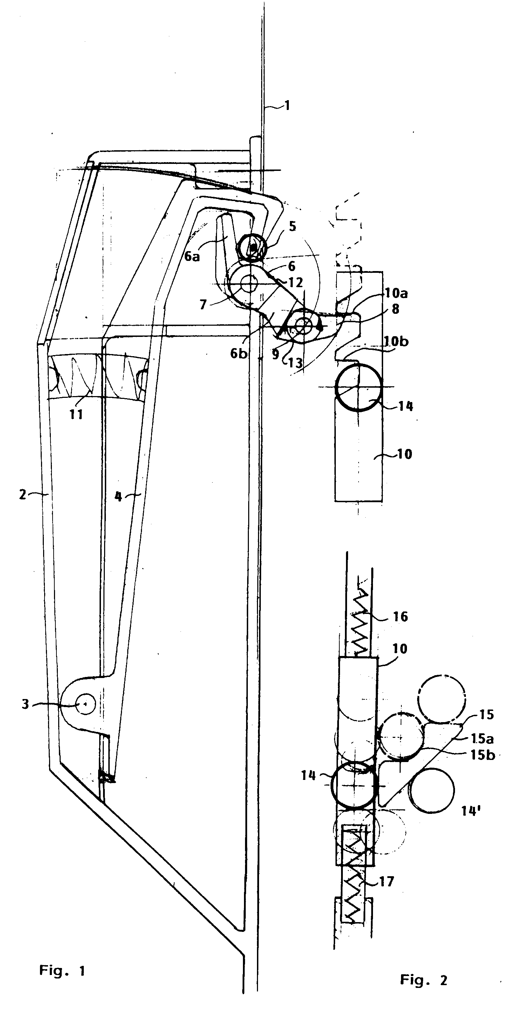

In **Fig. 1** ist mit 1 das Türblatt bezeichnet, das einen mehrfach abgewinkelten Griffbeschlag 2 trägt. Im unteren Teil des Griffbeschlages 2 ist eine Achse 3 angeordnet, auf der ein Betätigungshebel 4 schwenkbar gelagert ist. Das obere Ende dieses Hebels 4 ist zweifach abgewinkelt und trägt eine Rolle 5. Sie wirkt auf den linken Arm 6a eines Winkelhebels 6 ein. Der Hebel ist auf einer Achse 7 schwenkbar gelagert. Sein rechter Arm 6b trägt einen Schnäpper 8, der auf einer Achse 9 gelagert ist und auf einen im Türblatt untergebrachten Riegel 10 einwirkt.

Eine Schraubenfeder 11 zwischen den Teilen 2 und 4 drückt den Hebel 4 in die gezeichnete Stellung. An dem Winkelhebel 6 greift eine Schenkelfeder 12 an. Eine weitere Schenkelfeder 13 hält den Schnäpper 8 in Arbeitsposition.
Der Bedienende zieht mit einer Hand den Betätigungshebel 4 in Öffnungsrichtung der Tür an, bis dieser gegen den Griffbeschlag 2 stößt. Die Kraft auf den Hebel 4 kann dadurch verstärkt werden, daß man die Finger auf den Hebel 4 und den Daumen auf den Griffbeschlag 2 auflegt und die Hand schließt.
Mit dem Riegel 10 ist ein Schließzapfen 14 verbunden, der in den hier nicht dargestellten Schließkloben eingreift. Der Riegel 10 weist eine obere Rastnase 10a und eine untere 10b auf.
Die Schneide des Schnäppers 8 greift in der dargestellten Ruhelage unter die obere Rastnase 10a des Riegels 10.
Wenn man den Betätigungshebel 4 in Öffnungsrichtung der Tür, also zum Bediener zieht, nimmt die Rolle 5 den Winkelhebel 6 mit und der Schnäpper 8 zieht den Riegel 10 nach oben. Dabei geht der Schließzapfen 14 in die Zwischenrast. Der Riegel 10 behält eine Position bei, wenn der Betätigungshebel 4 losgelassen wird. Der Winkelhebel 6 bewegt sich im Uhrzeigersinn und der Schnäpper 8 rutscht unter die Rastnase 10b.
Bei erneutem Anziehen des Hebels 4 wird der Riegel 10 um eine weitere Stufe angehoben, so daß der Schließzapfen 14 an dem Schließkloben 15 vorbeilaufen kann.

**Fig. 2** zeigt den Riegel 10 mit dem Schließzapfen 14 vor dem an der Zarge angebrachten Schließkloben 15. Die Tür ist fest verschlossen.
Wenn der Riegel 10 um einen Schritt angehoben wird, rollt der Schließzapfen 14 in die mit unterbrochenen Linien dargestellte Zwischenrast 15b.
Beim zweiten Öffnungsschritt gelangt der Schließzapfen in die strichpunktiert dargestellte Position, in der der Schließkloben 15 mit der Tür nach links in die Öffnungsstellung gezogen werden kann.
Oberhalb des Riegels 10 ist eine langgestreckte Schraubenfeder 16 eingebaut, die beim Anheben des Riegels zusammengedrückt wird, sich bei offener Tür aber wieder ausdehnt. Eine weitere Schraubenfeder 17 liegt unterhalb des Riegels. Sie wird zusammengepreßt` wenn beim Schließen des Türblattes 1 der Schließkloben 15 gegen den Schließzapfen 14' läuft. Dabei drückt die Einlaufschräge 15a des Schließklobens 15 den Zapfen 14 nach unten. Anschließend rollt der Schließzapfen 14 wieder in die Verriegelungsstellung.

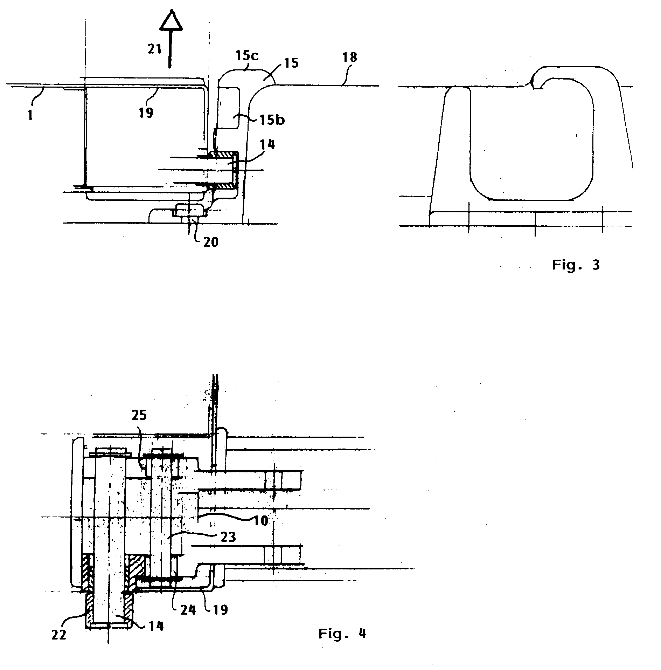

**Fig. 3** zeigt einen Querschnitt durch Zarge und Türblatt in der Höhe des Verschlusses. In das Türblatt 1 ist das Verschlußgehäuse 19 eingesetzt. Aus ihm ragt der Schließzapfen 14 heraus, der in der dargestellten Schließstellung an dem Schließkloben 15 anliegt.
Der Schließkloben 15 ist mit der Zarge 18 über Schrauben 20 verbunden. Wenn der Schließzapfen 14 aus der Zeichenebene heraus angehoben wird gelangt er in die Zwischenrast 15b des Schließklobens 15. Beim zweiten Öffnungsschritt wird der Schließzapfen 14 über den oberen Rand 15c hinweggehoben. Das Türblatt 1 kann in Richtung des Pfeiles 21 aufgezogen werden.

**Fig. 4** stellt einen Querschnitt durch das Verschlußgehäuse 19 dar. In dem Riegel 10 sitzt der mit einer Rolle 22 versehene Schließzapfen 14. Eine Achse 23 mit Rollen 24, 25 dient der leichtgängigen und verschleißfreien Lagerung des Riegels 10.

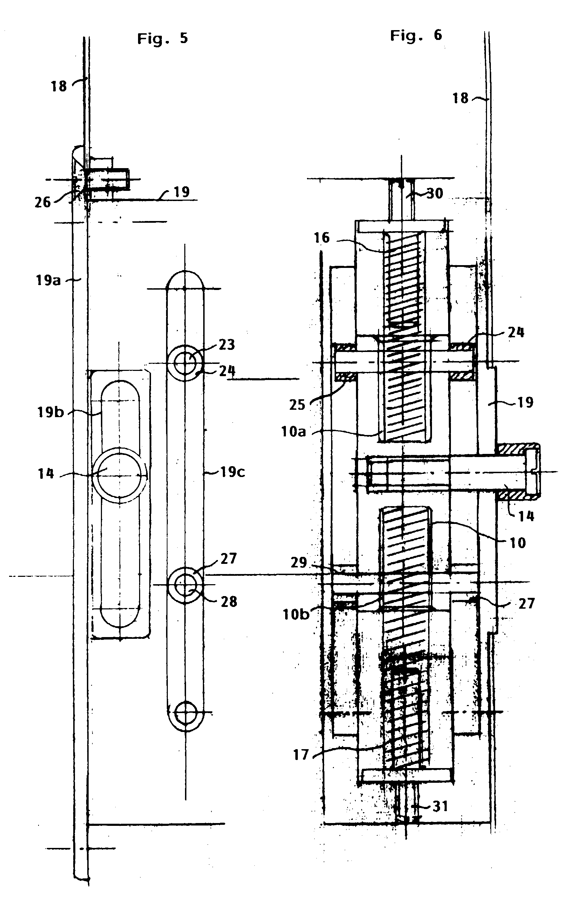

**Fig. 5** zeigt den Blick auf das Türblatt 1 mit dem Verschlußgehäuse 19, das nach außen hin einen Deckel 19a trägt. Eine Senkschraube 26 dient der Befestigung des Gehäuses 19 am Türblatt. Aus dem Verschlußgehäuse 19 ragt der Schließzapfen 14 heraus, der sich in einem Langloch 19b auf und ab bewegen kann. In einem Schlitz 19c erkennt man zwei Lagerrollen 24, 27 auf den Achsen 23 und 28.

**Fig. 6** stellt den Vertikalschnitt durch die um 90° gedrehte Anordnung nach Fig. 5 dar. In dem Verschlußgehäuse 19 ist der Riegel 10 über die Rollen 24, 25, 27, 29 gelagert.
Oberhalb des Riegels 10 ist eine kurze Schraubenfeder 16, unterhalb desselben eine lange Feder 17 angeordnet. Beide Federn werden über Gewindestifte 30, 31 so einjustiert, daß der Schließzapfen 14 die optimale Mittelstellung einnimmt.
Mit 10a, 10b sind die Rastnasen bezeichnet, an denen der Schnäpper 8 (Fig. 1) angreift, um den Riegel 10 gegen die Kraft der Feder 30 anzuheben.

Wenn man den beschriebenen zweistufigen Verschluß in einen einstufigen umwandeln will, genügt es, den in Fig. 2 beschriebenen Schließkloben 15 durch einen verkürzten Kloben, also ohne Zwischenrast, zu ersetzen.

### Gewerbliche Verwertbarkeit

Der neuartige Verschluß ist hervorragend geeignet, an verschiedenen Behältern, Geräten oder Maschinen eingesetzt zu werden, so weit dort leicht erhöhte Drücke oder Dampfschwaden auftreten können.
Die Bedienung der Türen mit diesem Verschluß ist narrensicher und besonders einfach, weil man zur festen Verriegelung die Tür nur zuzuwerfen braucht.

### Bezugszeichenliste

- 1: Türblatt
- 2: Griffbeschlag
- 3: Achse
- 4: Betätigungshebel
- 5: Rolle
- 6: Winkelhebel
- 6a: linker Arm
- 6b: rechter Arm
- 7: Achse
- 8: Schnäpper
- 9: Schnäpperachse
- 10: Riegel
- 10a, 10b: Rastnasen
- 11: Schraubenfeder
- 12, 13: Schenkelfedern
- 14: Schließzapfen
- 15: Schließkloben
- 15a: Einlaufschräge
- 15b: Zwischenrast
- 15c: oberer Rand
- 16, 17: Schraubenfedern
- 18: Zarge
- 19: Verschlußgehäuse
- 19a: Deckel
- 19b: Langloch
- 19c: Schlitz
- 20: Schrauben
- 21: Pfeil
- 22: Rolle
- 23: Achse
- 24, 25: Rollen
- 26: Senkschraube
- 27: Rolle
- 28: Achse
- 29: Rolle
- 30, 31: Gewindestifte

## Patentansprüche

1. Verschlußeinrichtung für die Tür eines mit Übertemperatur und/oder Überdruck arbeitenden Gerätes mit einem Betätigungshebel, der einen Schließzapfen bewegt, und einem am Türblatt befestigten Schließkloben, der eine Zwischenrast ermöglicht,
dadurch gekennzeichnet,
daß der Betätigungshebel (4) einen Winkelhebel (6) mitnimmt,
daß der Winkelhebel (6) einen Schnäpper (8) trägt,
daß der Schnäpper (8) einen mit Rastnasen (10a, 10b) versehenen und im Türblatt (1) gelagerten Riegel (10) anhebt und
daß der Riegel (10) einen Schließzapfen (14) aufweist, der in einem mit Einlaufschräge (15a), Zwischenrast (15b) und Hauptrast versehenen Schließkloben (15) ruht.

2. Verschlußeinrichtung nach Anspruch 1, dadurch gekennzeichnet,
daß der Schließzapfen (14) eine die Betätigung erleichternde Rolle (22) trägt und daß der Riegel (10) ebenfalls mit Rollen (24, 25, 27, 29) leichtgängig in dem Verschlußgehäuse (19) gelagert ist.

3. Verschlußeinrichtung nach Anspruch 1, dadurch gekennzeichnet,
daß der Betätigungshebel (4) als ein am unteren Ende gelagerter einarmiger Hebel mit einer auf den Winkelhebel (6) einwirkenden Rolle (5) ausgeführt ist und
daß der Ausschlag des Hebels (4) durch einen langgestreckten, feststehenden Griffbeschlag (2) begrenzt ist.

4. Verschlußeinrichtung nach Anspruch 1 und 2, dadurch gekennzeichnet,
daß der Riegel (10) mittels Schraubenfedern (16, 17) in einer Mittelstellung gehalten ist in der der Schließzapfen (14) auf der Hauptrast des Schließklobens (15) ruht.
